Europäisches Patentamt

(19) European Patent Office

Office européen des brevets

(11) Publication number: **0 070 891**
**B1**

(12) EUROPEAN PATENT SPECIFICATION

(45) Date of publication of patent specification: **26.11.86**

(21) Application number: **82900869.7**

(22) Date of filing: **03.02.82**

(86) International application number:
**PCT/US82/00142**

(87) International publication number:
**WO 82/02649 19.08.82 Gazette 82/20**

(51) Int. Cl.⁴: **A 22 C 13/00, D 01 F 2/06,
D 01 F 11/02**

(54) **Tubular sausage casings of regenerated cellulose adapted to be shirred and stuffed.**

(30) Priority: **06.02.81 US 232090**

(43) Date of publication of application:
**09.02.83 Bulletin 83/06**

(45) Publication of the grant of the patent:
**26.11.86 Bulletin 86/48**

(84) Designated Contracting States:
**BE DE FR GB SE**

(56) References cited:
**US-A-2 999 756
US-A-3 280 234
US-A-3 818 947
US-A-4 169 163**

(73) Proprietor: **TEEPAK, INC.
2 North Riverside Plaza
Chicago Illinois 60606 (US)**

(72) Inventor: **BRIDGEFORD, Douglas J.
1209 West John Street
Champaign, IL 61820 (US)**

(74) Representative: **Seiffert, Klaus et al
Gustav-Freytag-Strasse 25 Postfach 6145
D-6200 Wiesbaden 1 (DE)**

Courier Press, Leamington Spa, England.

## Description

This invention relates to tubular sausage casings of regenerated cellulose adapted to be shirred and stuffed with meat.

Artificial sausage casings made entirely of regenerated cellulose have been widely used in the processing of frankfurters and related sausage products for a number of years. The basic process for the manufacture of small diameter casings of regenerated cellulose is known as the "viscose process", as for example described in US—A—2,999,756 and US—A—3,835,113, and comprises extruding viscose which is a solution of sodium cellulose xanthate in caustic soda through an annular die into a coagulating bath to form a tubular casing.

The viscose solution is prepared by steeping chemically pure cellulose, typically of a wood or cotton source in a concentrated caustic soda solution from which an alkali cellulose crumb is obtained. The alkali cellulose crumb is converted to cellulose xanthate crumb by reaction with carbon disulfide. After the reaction, the cellulose xanthate crumb is slurried with an aqueous dilute caustic soda solution in a proportion to yield from about 7 to 8% cellulose and a total alkalinity of from about 6 to 7% to form the viscose. The viscose usually has a degree of polymerization (D.P.) in the range of about 450—750.

The tubular casing, once extruded, is coagulated substantially immediately by passing the extruded casing into an aqueous bath maintained at a temperature of about 42°C containing about 250 grams per liter (g/l) sodium sulfate and from about 100—135 g/l sulfuric acid.

The salt/acid mixture effects decomposition of the xanthate and coagulation of the extruded product. Coagulation liquid is applied both to the outer and interior wall surfaces to effect regeneration of the viscose. The casing is washed and then is plasticized by passing it through a water bath containing a plasticizer such as glycerine or a food acceptable glycol such as propylene glycol or diglycerol. The plasticized gelfilm is inflated under substantial air pressure and passed through a dryer to remove a substantial portion of the water to produce the finished casing product.

The film wall of casings used for the processing of sausages normally ranges in thickness from about 0.025 to 0.035 mm. The amount of cellulose material per unit length of the dried casing is conveniently indexed in the sausage casing art in terms of the weight of cellulose expressed in grams per 10 meters length (g/10 m) of a given casing width range or "Bone Dry Gauge" (BDG). The BDG of a casing will vary with the diameter of the casing as may the thickness. On the basis of commercial performance tests, the BDG for a casing having a dry flat width of 22.0—23.0 millimeter (mm) (Code 25) used for the processing of frankfurters is normally 20 g/10 m. The flat width of dried regeneration cellulose casings normally ranges from about Code 13 (21.0 mm) to about Code 40 (dry flat width 51.3 mm). For this dry flat width range the basis weight of the casing normally ranges from 24 to 34 grams per square meter (g/m$^2$) and the BDG ranges from 10.2 to 31.2 g/10 m.

The morphology or macrostructure of the regenerated cellulose casing wall is composed primarily of an outer skin portion on both the exterior and interior sides of the wall, the skin being characterized by large, poorly ordered amorphous regions and small or imperfect crystalline regions and an inner core portion characterized by large crystalline regions separated by amorphous regions of fairly high order, the skin and core sections of the wall structure being readily distinguished from each other when samples of a torn dehydrated section are examined under a scanning electron microscope (SEM).

It has been determined that the wall of the cellulose casing having a BDG of 20 g/10 m made under conventional viscose process conditions will have a skin layer forming about 7 to 25% of the total casing wall cross-sectional area.

After the coagulated and regenerated gel casing is impregnated with a plasticizer, it is dried to form the final casing product. Thereafter, the casing is wound on reels and subsequently shirred on high speed shirring machines, such as those described in US—A—2,010,626, 2,583,654, 2,722,714, 2,722,715, 2,723,201 and 3,451,827. In the shirring process, lengths of from 40—200 feet (12—61 m) of casing are compacted into pleated strands of a few inches, e.g., 10—75 cm at a rate of 3 to 4,5 m/sec.

After a casing is shirred, it is packaged and shipped to a meat packing house where an individual shirred strand is placed on a stuffing horn and a meat emulsion extruded to fill the casing to its fully extended length. The stuffing of the casing usually takes place within a few seconds with the result that the casing is extended from a shirred length of 8—27 inches (in.) (20.32—68.58 cms) to an extended length of 12—48 m (30.5—122 cms) or more at a rate of 0.6—1.8 m/sec.

The shirring process imposes several score pleats per foot of casing at extremely high rates of loading so that the casing must be flexible enough to withstand such pleating without damage to the casing wall which later shows up as pinholes during high speed stuffing operations. The rapid extension of the casing during stuffing requires that the casing be especially strong and resistant to tearing. If even minor holes develop in the casing, the casing may split or break during stuffing with the disadvantageous loss of meat product.

It is therefore critical to the commercial utility of regenerated cellulose casings that the casing be sufficiently flexible to be shirred without damage and the resultant shirred strand must be able to be readily deshirred under high speed stuffing operations without substantial breaking or pinholing. The shirred casing strand must be of sufficient strength to withstand normal handling required for providing end closures in the casing and placement in high speed stuffing machines.

2

# 0 070 891

Typical regenerated cellulose casing contains 65% cellulose, approximately 20% non-volatile plasticizer and the remainder being water. The plasticizer is incorporated in the casing product in order to make the casing flexible enough to be shirred at high speeds without damage and to be stuffed at high speeds without pinholing breakage or other commercially unacceptable behavior. During the shirring operation the casing is humidified so that the final moisture content is 16 to 20%. The moisture imparts additional plasticization to the casing and imparts greater flexibility to the casing to withstand subsequent high speed stuffing operations.

The US—A—3 280 234 discloses a method of preparing regenerated cellulose films having excellent dimensional stability, but no artificial sausage casings. According to said known method viscose is extruded in the form of a tubular film directly into a coagulating bath without regeneration to any substantial extent, the film is expanded in said bath and after leaving the bath, then slit longitudinally to provide a flat sheet and then regenerated in a regenerating bath. A coagulating bath containing 4 to 15% sulfuric acid and 5 to 20% sodium sulfate at a temperature of 25 to 60°C may be used. But this bath is not used for final regeneration. The wall thickness of these films before stretching is more than 0,056 mm (2,2 mils).

Said method is not useful for the production of sausage casings which have to be shirred and stuffed with meat product by high speed operations without tearing or showing pinholes.

Economic incentive exists to substantially reduce the basis weight of the casing as well as to reduce or eliminate the plasticizer component. Efforts to reduce the basis weight of regenerated cellulose casing made under conventional viscose process conditions results in casing products which are of insufficient strength for shirring and stuffing under modern commercial conditions. Attempts to manufacture casing of standard basis weight, but with elimination of the plasticizer, results in a shirred casing exhibiting a 50% tensile strength loss which encounters unacceptable high breakage during high speed commercial meat stuffing.

Thus, the invention is based on the objective to obtain lower cost regenerated cellulose sausage casings having improved casing physical properties. Especially the objective is to obtain a regenerated cellulose sausage casing of substantially reduced basis weight, e.g. 20—45% or lower, and a substantially reduced plasticizer content, e.g., 10% or less, the casing having the requisite strength and flexibility to undergo commercial shirring and meat stuffing operations without substantial breakage and pinholing.

According to the invention, the regenerated cellulose sausage casing having the flexibility and strength to withstand commercial shirring and meat stuffing operations has a basis weight of the cellulose in the range of about 16 to about 22 g/m² of cellulose for a casing dry flat width ranging from about 21 mm to about 51 mm, the wall thickness of the casing is in the range of about 0.0112 mm (0.44 mils) to about 0.0221 mm (0.87 mils) and the cross sectional area wall structure comprises at least about 30%, preferably about 30—55% skin that is tougher than the core. For example, Code 25 casing of the present invention has a BDG of 12 to 15 g/10 m as compared with a standard BDG of 20 g/10 m in Code 25 casing.

The skin portion is tougher than the core, so that by the increased skin portion the wall thickness and plasticizer content may be reduced without impairing the physical characteristics.

The casing products of the present invention can be shirred and stuffed without appreciable increase in the defect level, e.g., in pinholing or strand breakage, being noted. The casing product of the present invention is appreciably denser than prior art casing due to the absence of plasticizer and the appreciable absence of voids normally present in prior art casing. The voids are caused by the generation of gaseous by-products during the coagulation and regeneration steps of casing manufacture as the relatively thick walls of the gel casing impede the rapid diffusive escape of such gases during normal casing processing.

The skin layer levels increase as the temperature of the coagulation bath is decreased at a constant bath concentration. An increase in skin content effects a decrease in permeability of the casing to low molecular weight specie.

The tubular sausage casings of regenerated cellulose according to the invention are prepared by annularly extruded viscose to form a tubular product, coagulating the tubular product in a coagulation bath, regenerating the coagulated tubular product to form a gel tubing and drying to form the casing product, whereby the coagulation bath is maintained at a temperature in the range of about 22° to 38°C, preferably about 28° to 34°C, and comprises about 90 to 130, preferably about 100 to 130 g/l, sulfuric acid and about 200 to 300 g/l, preferably about 250 to 280 g/l, sodium sulfate.

The alkaline viscose solution is prepared by conventional procedures well known in the art and advantageously contains from about 6 to about 8% by weight cellulose and about 5 to about 8% by weight total alkalinity, the cellulose xanthate being derived from an alkali cellulose crumb having a DP in the order of 450 to 750 and preferably 550 to 650.

The viscose solution once prepared is extruded through an annular die of the type conventionally employed for the extrusion of tubular casing at the rate of 0.508 to 0.914 m/sec (100 to 180 feet per minute) and preferably 0.559 to 762 m/sec (110 to 150 feet per minute) into a Muller coagulation bath maintained at a temperature of 22° to 38°C, preferably 28° to 34°C containing from about 200 to 300 g/l and preferably about 250 to 280 g/l sodium sulfate and 90 to 130 g/l, preferably 100 to 130 g/l sulfuric acid. For a given contact time in the coagulation bath, the percent skin morphology increases as the temperature of the bath is decreased, as the salt concentration is increased, as the acid concentration decreased and as the xanthate content of the viscose is increased.

3

**0 070 891**

To achieve a reduction in casing wall thickness to prepare the thinner walled casing product of the present invention, the original width of the viscose process die through which the viscose is extruded is narrowed compared to the die orifice width used for conventional, thicker wall casing, i.e., the orifice width is reduced from about 0.292 to 0.305 mm (11.5—12.0 mils) to about 0.229 mm (9 mils). Alternatively, and preferably, the reduction in casing wall thickness can be achieved simply by using a conventional extrusion die having 0.292 to 0.306 mm (11.5—12.0 mils) annular clearance and pumping the viscose to the die at a proportionately lower, e.g., 25 to 40% lower, volume rate, so that at a fixed machine speed, the extruded casing is drawn from the die at the same linear speed as the thicker casing but with less volume of material per unit length.

After extrusion, the coagulated tubing is withdrawn from the coagulation bath and passed into a water wash bath to remove carryover salts from the coagulation bath.

The seamless cellulosic gel tubing thus formed is then successively passed through a series of conventional regeneration baths containing aqueous solutions of low concentrations of coagulation salts and acid and thereafter through a series of countercurrent water baths to remove the acid and salts remaining in the casing. The washed cellulosic tubing, which is still in a gel-like state can, if desired, be passed through a plasticizer bath composed of a solution of a water soluble hygroscopic plasticizer such as glycerine, sorbitol or a glycol such as propylene glycol. The passage of the casing through the plasticizer bath is adjusted so that less than 30% by weight, based on the weight of the casing, of the plasticizer is added to the gel casing. For many sausage applications, the plasticizer bath is eliminated entirely. The concentration of the plasticizer when present in the regenerated cellulose casing product of the present invention is preferably less than about 10% and ranges from 0 to 10% by weight of the casing, especially preferred casings are substantially free of plasticizer content.

The washed gel tubing is then dried to obtain the final casing product. Drying is accomplished by passing the casing through a hot-air dryer of the type conventionally used in the viscose process which is comprised of a heating tunnel having paired sets of rotating squeeze rolls at the entrance and exit stations. Heated air is circulated in the tunnel and the gel casing is continuously advanced through the tunnel by means of the paired rotating entrance and exit rollers. An inflating quantity of air is confined within that part of the casing extending between the entrance and exit rolls. The exit rolls are driven at the same or slightly higher peripheral speed than the inlet rolls to effect longitudinal orientation. The casing is inflated to effect distention of the circumferential diameter, typically in the range of 12% to 60%. The temperature at which drying is accomplished is conventionally about 107° to 121° C. However, because of the reduced thickness of the casings of the present invention, drying, using the same conventional hot air driers, can be accomplished at temperatures 30° to 80°F lower, i.e., at about 66° to 93°C. The gel tubing is dried to a moisture content of about 6% to about 12% by weight and preferably 9% to 11% by weight.

After drying, the cellulose casing is flattened in its passage through the exit rolls and is then wound on reels. The dried flattened casings then undergo conventional shirring operations by methods known to the art as previously discussed above, and the casings in the shirred state are shipped to the meat packer for the processing of sausage meats.

The regenerated cellulose sausage casing produced in this manner is a low basis weight, thin-walled casing having a low plasticizer content, which in spite of the low plasticizer content is very flexible and can be easily handled during further processing, i.e., shirring, filling with sausage meat and tying off of the finished sausages.

While the low basis weight casing of the present invention, absent plasticizer content can be shirred without damage and stuffed at a commercially acceptable low defect level, plasticizer at a concentration of about 3 to 10% by weight is optionally incorporated in the casing to provide humectant or hydroscopicity properties to the casing to retard the loss of moisture from the shirred strand when the strands are exposed to low humidity conditions. However, if adequate packaging and adequate control of the use of the casings in the packing plant is provided, the plasticizer addition is not required.

Because of the thinner wall dimensions of the casing, the casing can be shirred to produce a shirred strand which is 10 to 40% shorter for a given casing length than conventional shirred strands, resulting in a shirred product which is easier to handle and requires less packaging and storage space.

The low basis weight casing product of the present invention is stuffable with "frozen" i.e., −6° to 0°C meat emulsion at a very low defect level. Frozen meat emulsion is used for stuffing sausage products derived from turkey or chicken. The use of the frozen emulsion is necessary to minimize the incidence of microbiological activity during sausage processing. Conventional sausage casings formed from plasticized regenerated cellulose encounter a high defect level, e.g., 20 to 40% when stuffed with cold meat emulsion.

The invention will be further illustrated by reference to the following specific Examples.

Example I

In a series of runs to prepare Code 25 casing, a solution of viscose having a DP of 600, containing 7.7% by weight of cellulose and 6.5% by weight calculated sodium hydroxide and having a viscosity of 72 falling-ball seconds at 18°C was extruded under pressure through an annular slot die at a rate of 33 m/min, a process during which it formed a tubular body. To achieve a reduction in basis weight, the viscose was pumped to the die lip at volume rates which were 25 to 40% lower than conventionally employed, e.g., 522 to 653 grams per minute (g/min) as compared to 870 g/min conventionally used to prepare Code 25 casing.

4

The tubing was extruded in different runs into a coagulation bath maintained at temperatures varying from 30.2°C—36.0°C, the bath being composed of an aqueous solution containing from about 100—130 g/l sulfuric acid and from 255—272 g/l sodium sulfate. The coagulated gel tube was withdrawn from the coagulation bath at the rate of 0.559 m/sec and passed through a water bath at 25°C to remove occluded coagulation bath salts from the casing and then through several successive regenerating baths, the regenerating baths having a concentration of sulfuric acid and sodium sulfate which increased from 35 g/l by weight sulfuric acid and 100 g/l sodium sulfate in the first of these baths to 75 g/l sulfuric acid and 120 g/l sodium sulfate in the last of these baths. The gel casing was withdrawn from the terminal regeneration bath and passed through a series of counter-current flow ater wash baths at a temperature of 35°—60°C. The washed casing was passed through a bath containing an 11% by weight glycerine water solution which had been adjusted to a pH of 7.0 with sulfuric acid. The time the casing was immersed in the bath was adjusted so that the final casing product would contain 0—20% by weight glycerine.

The plasticized tube was dried by passing the tube, in an inflated state through a hot air dryer, the air temperature being varied from 66°—121°C at the dryer entrance and maintained at 54°C and 48°C at the midpoint and end stations. After exiting the dryer, the dried casing was wound on a reel.

The dried casing product was Code 25 (22.0—23.0 mm diameter), had a moisture content of about 9% and was quite flexible. Measurements taken of the casings indicated that they had a BDG range of 12.2—15 g/10 m. Examination under the SEM of torn hydrated wall portions of the casing product indicated that the skin area of the casing wall ranged from 32.3—40.8% of the total cross-sectional area of the casing.

The process conditions used to prepare these casings are summarized in Table I below. The physical properties of the casing are summarized in Tables II—III.

In Table II the tensile and other physical properties were measured on one set of conditioned casing using an Instron tester. Conditioned casing was obtained by maintaining a casing in a room at 24°C and a relatively humidity of 60% until moisture equilibrium with the atmosphere was attained. Conditioned casing physical properties give an approximation of casing characteristics under controlled moisture content.

In Table III the tensile and other physical properties of rewet casing is recorded. Rewet casing is casing wet in water and the tensile properties give an approximation of the casing characteristics during stuffing, after wet-out by the encased meat product.

For purposes of contrast, the procedure of Example I was repeated with the exception that either the coagulation bath temperature was 41.0°C (the temperature at which the viscose process coagulation bath is conventionally maintained) and the casing plasticized with 20% glycerine (Run No. X) or the coagulation bath temperature was 42.0°C and the casing was not plasticized with glycerine (Run. No. C). The physical properties of these comparative casings are also summarized in Tables I—III below.

# 0 070 891

TABLE I
Process conditions

| Run. Nr. | Coagulation conditions | | Temp. °C | Temp. (°) at dryer entrance | Physical properties | | | | |
|---|---|---|---|---|---|---|---|---|---|
| | Acid g/l | Salt g/l | | | % $H_2O$ | BDG g/10m | Basis wt. g/m² | % Skin | % Glycerine |
| A | 124.0 | 257 | 32 | 82 | 10.2 | 15.2 | 22.1 | 35.9 | 0 |
| B | 125.0 | 255 | 30.2 | 65 | 7.2 | 12.2 | 17.7 | 32.3 | 0 |
| C (Comparison) | 124.0 | 255 | 42.0 | 127 | 10.7 | 20.4 | 29.2 | 15.9 | 0 |
| D | 121.0 | 271 | 33.7 | 77 | 8.4 | 14.7 | 21.4 | 33.7 | 12.8 |
| E | 121.0 | 271 | 33.7 | 77 | — | 14.7 | — | 33.7 | 0 |
| F | 103.0 | 270 | 30.3 | 60 | 13.8 | 14.7 | 21.4 | 40.8 | 12.6 |
| G | 103.0 | 270 | 30.3 | 60 | — | 14.7 | — | 40.8 | 0 |
| H | 108.0 | 269 | 33.0 | — | — | 15.2 | 22.1 | 29.6 | 13.8 |
| I | 102.0 | 269 | 33.4 | — | — | 14.8 | 21.5 | 32.2 | 0 |
| J* | 101.0 | 270 | 36.4 | 99 | 12.9 | 15.1 | 22.0 | 28—32 | 13.6 |
| 1X (Comparison) | 127.0 | 147 | 42.0 | 99—104 | 9—11 | 20.3 | 29.2 | 14.0 | 20.0 |

*0.737 m/sec extrusion speed, withdrawn from coagulation bath at same speed.

TABLE II
Conditioned (60%) casing
tensile properties (flat stock)

| Run No. | Tensile kg/cm² | | Elongation % | | Energy J | |
|---|---|---|---|---|---|---|
| | Long. | Trans. | Long. | Trans. | Long. | Trans. |
| A | 1637 | 1723 | 13.8 | 41.4 | 0.387 | 0.230 |
| B | 1669 | 1700 | 12.5 | 41.7 | 0.273 | 0.575 |
| C | 1665 | 1742 | 14.4 | 39.0 | 0.560 | 0.922 |
| F | 1160 | 948 | 26.0 | 67.0 | — | — |
| G | 1329 | 1386 | 16.0 | 57.0 | — | — |
| H | — | 1110 | — | 63.0 | — | 0.82 |
| I | — | 1349 | — | 43.0 | — | 0.70 |
| J | — | 1242 | — | 55.9 | — | 0.72 |
| X | 1308 | 970 | 52.0 | 85.0 | — | — |

With reference to Tables I and II the tensile properties of conditioned casing made in accordance with

6

the conventional viscose process (Run. No. X) are such that the tensile strength in the transverse direction is substantially less (e.g., 60—90%) than that in the longitudinal direction.

In casings manufactured in accordance with the present invention the tensile strengths in both the longitudinal and transverse directions were substantially the same or isotropic. The isotropic character of the casing is desirable because when a casing is stuffed and linked with high speed stuffing machines, the links created in the casing by the twisting action used in linking imposes a circumferential stress on the casing. A high tensile strength in the transverse direction enables the casing to better withstand such linking stresses.

TABLE III
Rewet casing tensile properties

| Run No. | Break tensile kg/cm$^2$ | | Elongation % | | Break energy J. | |
|---|---|---|---|---|---|---|
| | Long. | Trans. | Long. | Trans. | Long. | Trans. |
| A | 375 | 392 | 46 | 97 | — | 0.49 |
| B | 352 | 422 | 42 | 103 | 0.31 | 0.44 |
| C | 372 | 434 | 50 | 99 | 0.63 | 0.81 |
| E | 411 | 443 | 47 | 105 | 0.51 | 0.62 |
| G | 362 | 384 | 42 | 107 | 0.47 | 0.59 |
| H | — | 416 | — | 104 | — | 0.59 |
| I | — | 323 | — | — | — | 0.46 |
| J | — | 390 | — | 88 | — | 0.55 |
| X | 316 | 281 | 55 | 145 | — | — |

Energy is a measure of the toughness of the casing under the test conditions and is the area under Tensile-Elongation curve.

The data in Table III shows that the rewet tensile properties of low basis weight casing made in accordance with the present invention is equal to or greater than cellulose casing made in accordance with the conventional viscose process.

Example II

The casings prepared in Example I were also subjected to the following evaluation tests: permeability, apparent porosity and density. The results of these tests are summarized in Table IV.

**0 070 891**

TABLE IV

| Run No. | Permeability cm/h | Apparent porosity $(cm^2/sec \times 10^{-7})$ | Density $g/cm^3$ |
|---|---|---|---|
| A | 0.220 | 2.40 | 1.4904 |
| B | 0.258 | 2.08 | 1.5014 |
| C | 0.220 | 3.25 | 1.5102 |
| F | 0.387 | 4.63 | — |
| G | 0.328 | 3.59 | — |
| H | 0.399 | 5.01 | — |
| I | 0.328 | 3.67 | — |
| J | 0.374 | 5.11 | — |
| X | 0.175—0.214 | 3.15—3—85 | 1.342—1.359 |

Permeability is determined by the diffusion rate (centimeters per hour) of a 1% solution of potassium ferricyanide and was used to index the porosity of the casing wall to low molecular weight compounds.

Permeability is as measure of moisture evaporation from the encased frankfurter during processing as well as access to smoke to the meat during cooking and smoking of the encased meat product.

Permeability is the absolute measurement of the rate of permeation through the casing wall with no correction for wall thickness. Apparent porosity is a measure of the relative inherent porosity of the casing wall. Apparent porosity is obtained by multiplying the measured permeability by the wet thickness of the casing wall.

Density is determined by immersion of a casing section in xylene in a pycnometer. The higher the density the less microscopic or submicroscopic voids present in the casing. Higher densities also reflect the extent of highly ordered volume elements in the cellulose.

The data in Table IV indicates that although the low basis weight casings of the present invention were denser and had a measured permeability less than that of conventional casing (Run No. X), the apparent porosity was equivalent due to the thinner walls of the low basis weight casing, wherein the low basis weight casings remain amenable to smoke and other gaseous casing agents used in sausage meat manufacture.

Example III

The casings prepared in Example I were also subjected to the following additional evaluation tests: Rewet Flat width (RWFW), Recommended Stuffing Diameter Pressure (RSD), Burst Pressure and Burst Diameter. The results are summarized in Table V below.

8

TABLE V

| Run No. | RWFW (mm) | RSD Press Pa | Burst pressure Pa | Burst diameter Pa |
|---------|-----------|--------------|-------------------|-------------------|
| A | 33.6 | 1.04 | 3.56 | 0.44 |
| B | 33.5 | 0.85 | 2.79 | 0.47 |
| C | 33.4 | 1.28 | 4.77 | 0.45 |
| E | — | — | 3.87 | — |
| G | — | — | 3.91 | — |
| H | 32—33.5 | 2.64 | 3.64 | — |
| I | 32—33.5 | — | — | — |
| J | 32—33.5 | 2.71 | 3.80 | — |
| X | 38.2 | 1.71 | 4.44 | — |

RWFW is the rewet flat width and is the width in millimeters that the casing acquires when wet in water for 20 minutes at room temperature.

The RWFW data in Table V indicates that the RWFW of casing prepared in accordance with the practice of the present invention can be controlled to present commercial standards.

Recommended stuffing diameter (RSD) is the diameter which the meat packer should stuff the casing to secure firm links of encased sausage meat having the required reproducible weight and ease of peeling of the casing from the sausage meat. Overstuffing results in excessing casing breakage and poor peeling. The recommended stuffing diameter of Code 23 is 20.5 mm and 22.5 mm for Code 25. RSD pressure is the pressure which the casing will be under when stuffed to the recommended stuffing diameter. It will differ with each code.

Burst pressure is the pressure to which the casing can undergo before burst. Burst diameter is the average diameter of the casing at burst. The burst diameter will be substantially larger than the recommended stuffing diameter and provides a leeway for pressure variations in the stuffing machine.

Burst pressure and burst diameter is determined by clamping the ends of a length of casing and introducing air rapidly into the casing. The expanded diameter is measured by a non-contact means and pressure is measured corresponding to each of the diameter measurements. The pressure at which the casing bursts is recorded in centimeters of mercury and the diameter at burst reported in millimeters mercury.

The data in Table V shows that in casing made in accordance with the practice of the present invention the burst diameter is nearly constant over a wide range of burst pressure.

Example IV

The Code 25 casings prepared in Example I were conditioned and then shirred using conventional shirring equipment. The tensile properties of the shirred casing were measured and these measurements are summarized in Table VI below.

The term "conditioned casing" means casing that has been exposed to constant humidity and temperature for a time sufficient for the casing to come to a moisture equilibrium with the humidified atmosphere. The casing when conditioned at 60% relative humidity (RH) will equilibrate after 24 hours at 22°C to a moisture content of about 12 to 14%, and at 80% RH at 22°C for 24 hours the casing will equilibrate to a moisture content of 18 to 20%.

The break tensile of unshirred conventional viscose process casing is normally in the range of 18,000—19,000 psi (1265—1336 kg/cm$^2$) in the longitudinal (L) direction and 16,000—17,000 psi (1125—1195 kg/cm$^2$) in the transverse (T) direction and an elongation of 45—50% in the longitudinal direction and 70% in the transverse direction. The unshirred conventional casing when subjected to rewet conditions has a break tensile of 5,192 psi in the longitudinal direction and 4,698 in the transverse direction and 4,698 in the transverse direction and an elongation of 81% in the longitudinal direction and 146% in the transverse direction.

# 0 070 891

### TABLE VI
#### Effect of shirring on tensile properties
#### as manufactured casing

| | Tensile (kg/cm$^2$) | | | | Elongation % | | | |
| | 60%R$_H$ | | 80% RH | | 60% RH | | 80% RH | |
| No. | L | T | L | T | L | T | L | T |
|---|---|---|---|---|---|---|---|---|
| C* | — | — | 680 | 870 | — | — | | |
| H | 1195 | — | 1056 | — | 28.7 | — | 34.2 | 32.8 |
| I | 1556 | — | 1360 | — | 16.2 | — | 22.0 | — |
| J | 1354 | — | 1171 | — | 20.2 | — | 29.0 | — |
| X | 1354 | — | 1265 | 1125 | — | — | 40.0 | 65.0 |
| | | | Under rewet conditions | | | | | |
| A | — | — | 423 | 485 | — | — | 47.0 | 101.0 |
| B | — | — | 423 | 321 | — | — | 48.0 | 97.0 |
| H | — | — | — | 420 | — | — | — | 107.0 |
| X | — | — | 347 | 333 | — | — | 50.0 | 98.0 |

\* Break Tensile and Elongation in unshirred state were as follows:

| Break tensile (kg/cm$^2$) | | Elongation (%) | |
| L | T | L | T |
|---|---|---|---|
| 1665 | 1671 | 14.4 | 39.0 |

The data in Table VI indicates that the tensile properties of conventional casing (Run X) and low basis weight casing prepared in accordance with the practice of the present invention (Runs H, I, J) do not undergo substantial loss of tensile properties when shirred, whereas as glycerine-free cellulose casing having a normal BDG level, e.g., 20.4 g/10 m, (Run No. C) encounters a substantial, e.g., 50%, reduction in tensile strength after shirring.

The rewet data in Table VI indicates that adequate tensile strength is present for the thin-walled casing of the present invention even in the rewet state.

Example V

Some casings prepared in Example I were shirred and subjected to meat stuffing operations.

In the manufacture of frankfurters, a meat emulsion is pumped into the shirred casing, the meat is cooked and cured in the casing and then peeled away from the cooked meat to obtain is "skinless" frankfurter. To enhance the peelability of the casing, a "peel coating" is sprayed onto the interior of the casing during the shirring operation.

During the shirring operation a peel composition composed of 0.75% carboxymethyl cellulose, 1.0% sorbitan trioleate and 0.05% polyoxyethylene (23) laury. ether, the balance being water was sprayed onto the interior surface of a portion of the casings prepared in Example I following the procedure disclosed in U.S. 4,137,947. The casing was then shirred using the apparatus described n U.S. 3,451,827.

The resistance of the casings, both shirred and flat stock, to bursting under stuffing conditions was measured by the Mullen burst test.

Mullen burst tests were performed on dry, i.e., 10% moisture content casing and on conditioned casing having a moisture content that would be typical for a shirred casing to be stuffed. The Mullen bursts were conducted to determine whether the shirring operations would cause a reduction in the burst strength as compared to conventional casing. Typically, the casing of the present invention had a Mullen burst strength per mil thickness in the conditioned state that was higher than that for a plasticized conventional casing, thereby indicating that the reduction in basis weight in the casings of the present invention is offset by the

10

increase in casing wall strength resulting from the reduction in plasticizer content and greater density. The data is summarized in Table VII below.

TABLE VII
Casing physical properties Mullen bursts
for flat stock and shirred strand

| Run No. | % Moisture | kg/cm³ | kg/cm²/mm Thickness |
|---------|-----------|--------|---------------------|
| A | 13.3 | 3.97 | 259 |
| Aa | 27.5 | 3.54 | 229 |
| B | 14.4 | 3.45 | 289 |
| Ba | 24.9 | 2.99 | 250 |
| C | 12.2 | 5.67 | 272 |
| Cb | 17.9 | 3.83 | 186 |
| D | 16.3 | 3.04 | 201 |
| F | 16.5 | 2.95 | 197 |
| H | 14—17 | 2.38 | 109 |
| I | 14—17 | 2.96 | 169 |
| J | 14—17 | 2.47 | 126 |
| X | 14.0 | 3.58 | 128 |

"a" denotes that the casing is shirred to a 10% shorter strand, i.e., because casing wall is thinner casing can be compressed to a greater degree to produce a shorter strand.

"b" denotes that the casing is shirred using normal compression. All runs not denoted were measured using flat stock.

Example VI

Coated shirred strands prepared in Example V having a moisture content in the commercial range, e.g., 18—21%, were stuffed with sausage emulsion of various compositions used for making frankfurters. The shirred casing strand used was compressed to varying lengths from normal to 30% less than normal. The number of casing defects, i.e., primarily the existance of pinholes, was determined by observing the performance of the strands during shirring and stuffing operations. Shirring of the casing to compressed strands shorter than normal appeared to cause no damage to the casing.

Stuffing was accomplished with a Frank-A-Matic® stuffing machine 0.66—1.32 m/sec using different meat emulsions.

The temperature of the meat emulsions was 14°C. The resulting stuffed links were of very uniform diameter. When the meat was cooked and smoked at a normal cycle in conventional smoke houses, a normal color, odor and taste resulted in the final cooked sausages. During the high speed stuffing operation, the casing showed normal pinhole tendencies and broke in excessive amounts only if stuffing was attempted at one to three millimeters above the recommended stuffing diameter. In normal Meat packing operations, overstuffing to 1 mm above RSD is rarely encountered.

During the cooking process, which was a conventional cook cycle lasting about one and three quarter hours, the yield of weight of frankfurters from a given casing length did not differ materially from that of control of stuffed raw meat in conventional thick walled sausage casings.

The results of the stuffing tests are summarized in Table VIII below.

**0 070 891**

TABLE VIII
Meat stuffing test results

| Run No. | Strand length | Defects* | Cooked meat yield% |
|---|---|---|---|
| B | Normal | 1 | 89.2—92.5** |
| | −10% | 0 | |
| | −20% | 0 | |
| | −30% | 0 | |
| A | Normal | 0 | 82.9—85.1**** |
| | −10% | 0 | |
| | −20% | 0 | |
| C | Normal | 1 | 86.6*** |
| | −10% | 1 | |
| D | −20% | 0 | |
| F | −20% | 0 | |
| H | −20% | 0 | |
| I | −20% | 0 | |
| J | −20% | 0 | |
| X | −20% | 0 | |

**Beef-pork, 3% salt
***100% pork, 2% salt
****all pork, 3% salt

Control yield for beef-pork 3% salt is 88.1—91.2.
Control yield for all pork was 86.6
The data in Table VIII shows that the low basis weight cellulose casing of the present invention having no plasticizer content can be stuffed at the normal 18 to 20% moisture content with an acceptable defect or breakage level and to produce links of standard cooked meat yield.
By way of contrast, Run C casing manufactured without plasticizer under normal (42°C) coagulation conditions showed a relatively higher defect level during commercial high speed stuffing operations.

Example VII
The procedure of Example VI was repeated using a beef-pork emulsion with exception that the temperature of the emulsion was lowered to −6 to −4°C to simulate frozen turkey stuffing. The results are recorded in Table IX below.

TABLE IX
Frozen meat stuffing tests

| Run No. | No. of strands | Defects |
|---|---|---|
| H | 3 | Break occurred at 26 mm* |
| I** | 2 | 0 |

*RSD is 22—23 mm
**7°C meat emulsion

12

Example VIII

The procedure of Example I was repeated with the exception that the coagulation bath was maintained at 38°C to produce 16 g/10 m BDG casing. The casings were plasticized with glycerine to levels ranging from 0—20% by weight. The skin content of the casings was 18—20%. The dried casings were shirred and humidified to a moisture level of between 13.5% to 20% water.

The humidified shirred strands were stuffed at a meat packing house for making smoked sausages. Stuffing was accomplished at 0.66 to 1.32 m/sec.

The temperature of the beef-pork meat emulsion was 14°C. The color of the cooked, smoked casing was normal. Cooked yields were in the order of 90.6—92.1%. The number of casing defects, i.e., the existance of pinholes, was determined by observing the performance of the strands during shirring and stuffing operations. The results of the stuffing tests are recorded in Table X below.

For purpose of contrast, the procedure of Example I was repeated with the exception that the coagulation bath temperature was raised to 42.5°C, the temperature at which the coagulation bath is conventionally maintained. The casing had a BDG of 20.3 g/10 m and the skin content was 14%. The color of the smoked, stuffed casing was normal. The number of defects is also recorded in Table X below. The comparative run is designated by the symbol "C" in Table X.

TABLE X

| Run No. | Glycerol content % | $H_2O$ content % | Strands tested | Defects noted |
|---------|--------------------|------------------|----------------|---------------|
| 1 | 20 | 20 | 2 | 0 |
| 2 | 20 | 14 | 1 | 0 |
| 3 | 10 | 20 | 2 | 0 |
| 4 | 0 | 20 | 4 | 0 |
| 5 | 0 | 17.5 | 1 | 0 |
| 6 | 0 | 13.5 | 1 | 0 |
| C | 20 | 16—20 | 2 | 0 |

Example IX

The procedure of Example VI was repeated with the exception that the interior surface of the casing (Run Nos. 8, 9, Table XI below) was interiorly coated with the peel coating formulation used in Example V, during the shirring operation, or the interior of the casing (Run Nos. 10, 11, Table XI below) was humidified with a formulation composed of a 1% water solution of sorbitan trioleate during the shirring operation. The casings were plasticized with different levels of glycerol. All the casings had a moisture level of 16—18%. The number of defects found in the stuffed strands is recorded in Table XI below.

TABLE XI

| Run No. | Glycerol content % | Strands tested | Defects noted |
|---------|--------------------|-----------------|---------------|
| 8 | 0 | 3 | 0 |
| 9 | 10 | 3 | 0 |
| 10 | 0 | 3 | 0 |
| 11 | 10 | 3 | 0 |

**Claims**

1. An artificial sausage casing of regenerated cellulose adapted to be shirred and stuffed with meat characterized in that the basis weight of the cellulose of which the casing is comprised is in the range of about 16 to about 22 g/m² of cellulose for a casing dry flat width ranging from about 21 mm to about 51 mm, the wall thickness of the casing is in the range of about 0.0112 mm (about 0.44 mils) to about 0.0221

13

mm (about 0.87 mils) and the cross sectional area wall structure comprises at least about 30% skin that is tougher than the core.

2. The casing of claim 1 characterized in that the skin comprises about 30 to about 55% of the cross sectional area of the wall structure.

3. The casing of claims 1 or 2 wherein the gel tubing is plasticized to a plasticizer content of between 0 and about 10 percent by weight of the casing.

4. The casing of claim 1 characterized in that it is substantially free of plasticizer content.

5. The casing of claim 1 characterized in that it is prepared by annular extruding viscose to a thickness of from about 0.0112 to about 0.0221 mm (about 0.44 to about 0.87 mils) to form a tubular product, into a coagulation bath comprising from about 200 to about 300 g/l sodium sulfate and about 90 to about 135 g/l sulfuric acid at a temperature of from about 25°C to about 38°C.

6. The casing of claim 5, characterized in that it is prepared by extruding into a coagulation bath comprising from about 100 to about 130 g/l sulfuric acid and about 250 to about 280 g/l sodium sulfate.

**Patentansprüche**

1. Künstliche Wursthülle aus regenerierter Cellulose zum Raffen und Füllen mit Fleisch, dadurch gekennzeichnet, daß das Flächengewicht der Cellulose, aus der die Hülle aufgebaut ist, im Bereich von etwa 16 bis etwa 22 g/m² Cellulose für eine Hüllen-Trockenflachbreite im Bereich von etwa 21 mm bis etwa 51 mm liegt, die Wanddicke der Hülle im Bereich von etwa 0,0112 mm (etwa 0,44 mill) bis etwa 0,0221 mm (etwa 0,87 mill) und die Querschnittsfläche der Wandstruktur wenigstens etwa 30% Haut aufweist, die zäher als der Kern ist.

2. Hülle nach Anspruch 1, dadurch gekennzeichnet, daß die Haut etwa 30 bis etwa 55% der Querschnittsfläche der Wandstruktur umfaßt.

3. Hülle nach Anspruch 1 oder 2, bei der das Gelrohr mit einem Weichmachergehalt zwischen 0 und etwa 10 Gewichts-% der Hülle weich gemacht ist.

4. Hülle nach Anspruch 1, dadurch gekennzeichnet, daß sie im wesentlichen frei von Weichmachergehalt ist.

5. Hülle nach Anspruch 1, dadurch gekennzeichnet, daß sie durch ringförmiges Extrudieren von Viskose zu einer Dicke von etwa 0,0112 bis etwa 0,0221 mm (etwa 0,44 bis etwa 0,87 mill) unter Bildung eines rohrförmigen Produktes in ein Koagulierbad, das etwa 200 bis etwa 300 g je Liter Natriumsulfat und etwa 90 bis etwa 135 g je Liter Schwefelsäure enthält, mit einer Temperatur von etwa 25°C bis etwa 38°C hergestellt ist.

6. Hülle nach Anspruch 5, dadurch gekennzeichnet, daß sie durch Extrudieren in ein Koagulierbad, das etwa 100 bis etwa 130 g je Liter Schwefelsäure und etwa 250 bis etwa 280 g je Liter Natriumsulfat enthält, hergestellt ist.

**Revendications**

1. Enveloppe artificielle pour saucisses, en cellulose régénérée convenant pour être froncée et bourrée de chair, enveloppe caractérisée en ce que le poids de base de la cellulose dont l'enveloppe est constituée est dans la gamme d'environ 16 à environ 22 g/m² ds cellulose pour une largeur à plat d'enveloppe sèche allant d'environ 21 mm à environ 51 mm, l'épaisseur de paroi de l'enveloppe est d'environ 0,0112 mm (environ 0,44 millième de pouce) à environ 0,0221 mm (environ 0,87 millième de pouce), et la structure de paroi d'aire de surface transversale comprend environ 30% de peau, c'est-à-dire qu'elle est plus tenace que la partie centrale.

2. Enveloppe selon la revendication 1, caractérisée en ce que la peau représente environ 30 à environ 55% de l'aire ds surface transversale de la structure de paroi.

3. Enveloppe selon les revendications 1 ou 2, dans laquelle la tubulure en gel est plastifiée jusqu'à une teneur en plastifiant comprise entre 0 et environ 10% du poids de l'enveloppe.

4. Enveloppe selon la revendication 1, caractérisée en ce qu'elle est essentiellement dépourvue de plastifiant.

5. Enveloppe selon la revendication 1, caractérisée en ce qu'elle est préparée par extrusion annulaire de la viscose jusqu'à une épaisseur d'environ 0,0112 à environ 0,0221 mm (environ 0,44 à environ 0,87 millième de pouce) pour former un produit tubulaire, dans un bain de coagulation comprenant environ 200 à environ 300 g/l de sulfate de sodium et environ 90 à environ 135 g/l d'acide sulfurique à une température d'environ 25°C à environ 38°C.

6. Enveloppe selon la revendication 5, caractérisée en ce qu'elle est préparée par extrusion dans un bain de coagulation comprenant environ 100 à environ 130 g/l d'acide sulfurique et environ 250 à environ 280 g/l de sulfate de sodium.